# EUROPEAN PATENT APPLICATION

(11) **EP 4 730 122 A1**
(43) Date of publication of application: **22.04.2026**
(21) Application number: 24926675.0
(22) Date of filing: 28.08.2024
(51) Int. Cl.: G06F 9/451

(54) **LONG INTERFACE RENDERING METHOD, APPLICATION INTERFACE DISPLAY METHOD AND ELECTRONIC DEVICE**

(30) Priority: 27.02.2024 CN 202410216839
(71) Applicant: Huawei Technologies Co., Ltd., Shenzhen, Guangdong 518129 (CN)
(72) Inventor: WU, Defeng, Shenzhen, Guangdong 518129 (CN)
(74) Representative: Gill Jennings & Every LLP
(86) International application number: PCT/CN2024/115273
(87) International publication number: WO 2025/179808

(57) **Abstract**

A method for rendering a long interface, a method for displaying an application interface, and an electronic device are provided, to improve performance of the electronic device, reduce a probability of a frame loss of the electronic device, and reduce a possibility of displaying a white block. In the method, the long interface is divided into a plurality of display blocks, and when a user switches different interfaces on the long interface for displaying by using a sliding operation, a target display block that can display a window interface is determined. In addition, heights of the display blocks obtained through division are greater than a height of a display window, and a spacing between adjacent display blocks is set to be less than the height of the display window, so that an overlapping region exists between the adjacent display blocks, and the overlapping region is greater than the height of the display window. In this way, a rendered target display block can be cropped in a specific buffer region, to obtain a plurality of frames of display window interfaces, and a to-be-rendered region does not need to be recalculated and re-rendered for each frame.

## Description

### CROSS-REFERENCE TO RELATED APPLICATIONS

This application claims priority to Chinese Patent Application No. 202410216839.2, filed with the China National Intellectual Property Administration on February 27, 2024 and entitled "METHOD FOR RENDERING LONG INTERFACE, METHOD FOR DISPLAYING APPLICATION INTERFACE, AND ELECTRONIC DEVICE", which is incorporated herein by reference in its entirety.

### TECHNICAL FIELD

This application relates to the field of terminal technologies, and in particular, to a method for rendering a long interface, a method for displaying an application interface, and an electronic device.

### BACKGROUND

A user interface is an important part of design elements of a website or an application, and can present diverse information to a user. In addition to fixed information displayed through a native component, and the like, some user interfaces may generally include a web interface displayed through a web (web) component. The web interface is generally constructed through a scrollable component. In this way, based on a sliding operation, a user interface including the web interface can be constructed as a long interface that exceeds a height of a display window of an electronic device.

For some display scenarios of the long interface, the user interface is rendered for a plurality of times. As the user performs a sliding operation, a to-be-rendered region is continuously updated. As a result, the electronic device needs to continuously recalculate and re-render the to-be-rendered region, and a large performance loss exists. Even when the sliding operation is fast, problems of a frame loss and appearance of white blocks may further occur due to untimely calculation.

### SUMMARY

This application provides a method for rendering a long interface, a method for displaying an application interface, and an electronic device, to improve performance of the electronic device, reduce a probability of a frame loss of the electronic device, and reduce a possibility of displaying a white block.

According to a first aspect, this application provides a method for rendering a long interface. The method may be applied to an electronic device. In the method, in response to a sliding operation on the long interface, a target display block adjacent to an original display block is determined, where the original display block is a display block selected before the sliding operation is detected, both the original display block and the target display block are obtained by dividing the long interface, a spacing between the original display block and the target display block is less than a height of a display window, and heights of the original display block and the target display block are greater than the height of the display window; the target display block is rendered; and in response to the sliding operation, the rendered target display block is cropped frame by frame based on the display window, to obtain a plurality of frames of target window interfaces, and the plurality of frames of target window interfaces are displayed frame by frame.

In the method, in a manner of pre-dividing the long interface into blocks, a target display block may be determined with reference to a correspondence between a sliding offset of a sliding operation and a display block. In this way, the electronic device may render the target display block, and a specific spacing and an overlapping region exist between adjacent display blocks, so that the electronic device may crop a same display block in a specific buffer region, to obtain a plurality of frames of interfaces corresponding to a target display window. In this case, a to-be-rendered region does not need to be recalculated and re-rendered frame by frame. Therefore, according to the method, performance of the electronic device can be improved, a probability of a frame loss of the electronic device can be reduced, and a possibility of displaying a white block can be reduced.

In some implementations, determining, in response to the sliding operation on the long interface, the target display block adjacent to the original display block includes: determining a sliding offset value corresponding to the sliding operation; and in a sliding direction, when the sliding offset value does not exceed a preset pixel value of the original display block, determining that a selected target display block is the original display block; or in a sliding direction, when the sliding offset value exceeds a preset pixel value of the original display block, determining to select, as the target display block, a next display block adjacent to the original display block in the sliding direction. For example, the sliding direction may be a sliding direction or a scrolling direction of the long interface.

In this implementation, a location relationship between the target window interface and the original display block is determined based on the sliding offset value. In a scenario in which the original display block may be incapable of fully displaying the target window interface, the target window interface may be displayed based on a next adjacent target display block. In this way, the electronic device may crop a same display block by using the correspondence between a sliding operation and a display block, to obtain a plurality of frames of interfaces corresponding to the target display window. In this case, a to-be-rendered region does not need to be recalculated and re-rendered frame by frame. Therefore, according to the method, performance of the electronic device can be improved, a probability of a frame loss of the electronic device can be reduced, and a possibility of displaying a white block can be reduced.

In some implementations, the preset pixel value is a pixel value at a middle location of the original display block.

In this implementation, the middle location of the original display block may be used as a boundary, to determine whether the original display block can fully display the target window interface, so that the electronic device can crop the same display block, to obtain the plurality of frames of interfaces corresponding to the target display window. In this case, the to-be-rendered region does not need to be recalculated and re-rendered frame by frame. Therefore, according to the method, performance of the electronic device can be improved, a probability of a frame loss of the electronic device can be reduced, and a possibility of displaying a white block can be reduced.

In some implementations, before determining the target display block adjacent to the original display block, the method further includes: sequentially obtaining N display blocks and a tail display block based on a height of the long interface, a first preset height of a display block, and a preset spacing between display blocks, where the tail display block is a last display block obtained through division, and N is a positive integer; and heights of the N display blocks are equal to the first preset height, and a height of the tail display block is less than or equal to the first preset height.

In this implementation, based on arbitrariness of the height of the long interface, when the long interface is divided into display blocks, different processing may be performed on the tail display block, so that accuracy of a division result can be ensured.

In some implementations, before determining the target display block adjacent to the original display block, the method further includes: sequentially obtaining a head display block, (N-1) display blocks, and a tail display block based on a height of the long interface, a second preset height of the head display block, a second preset height of a display block, and a preset spacing between display blocks, where the head display block is a 1^{st} display block obtained through division, the tail display block is a last display block obtained through division, and N is a positive integer; and a height of the head display block is equal to the second preset height, the second preset height is less than the first preset height, heights of the (N-1) display blocks are equal to the first preset height, and a height of the tail display block is less than or equal to the first preset height.

In this implementation, in application scenarios of some applications, frequency of viewing content below the long interface is low, but frequency of viewing and using fixed information is high. Therefore, a height of a head display block adjacent to a fixed block may be set to be less than a size of another display block, so that a performance loss and a frame loss problem can be balanced, and power consumption can be reduced.

In some implementations, a height of the display block is a preset multiple of the height of the display window, and the preset multiple is greater than 1; or a height of the display block is a predefined height, and the predefined height is greater than the height of the display window.

In some implementations, the display window is a full-screen window, an application window, or a non-full-screen window of the electronic device.

In some implementations, the sliding direction includes sliding downward and sliding downward.

According to a second aspect, this application further provides a method for displaying an application interface. The method may be applied to an electronic device. The method provided in the second aspect may include: displaying a first interface of an application, where the first interface includes a functional component and a web component, the web component includes a first web page, and the first web page is obtained by cropping a rendered first display block; cropping, in response to a first sliding operation on the first interface, the first display block to obtain a second web page; and displaying a second interface that includes the second web page. The functional component may be configured to display some function information included in the application interface. For example, the functional component may be a native component, and may be configured to display some fixed information, for example, a fixed control.

In some implementations, a display region displayed by the functional component may also be obtained by cropping the rendered first display block.

In some implementations, the method further includes: rendering a second display block in response to a second sliding operation on the first interface; and
cropping the second display block to obtain a third web page; and displaying a third interface that includes the third web page.

In some implementations, the method further includes: cropping, in response to a third sliding operation on the first interface, the second display block to obtain a fourth web page; and displaying a fourth interface that includes the fourth web page.

In some implementations, the first display block and the second display block overlap, and an overlapping height is greater than a height of the first interface.

According to a third aspect, this application further provides an electronic device. The electronic device includes at least one memory and at least one processor. The at least one memory is configured to store computer program code, and the computer program code includes computer instructions. When the computer instructions are executed by the at least one processor, the electronic device is caused to perform the method in any one of the first aspect and the implementations of the first aspect, or perform the method in any one of the second aspect and the implementations of the first aspect.

According to a fourth aspect, this application further provides an apparatus for rendering a long interface. The apparatus includes modules/units for performing the method in any one of the first aspect and the implementations of the first aspect. These modules/units may be implemented by hardware, or may be implemented by executing corresponding software by hardware.

According to a fifth aspect, this application further provides an apparatus for displaying an application interface. The apparatus includes modules/units for performing the method in any one of the second aspect and the implementations of the second aspect. These modules/units may be implemented by hardware, or may be implemented by executing corresponding software by hardware.

According to a sixth aspect, a computer-readable storage medium is provided. The computer-readable storage medium stores a computer program (which may also be referred to as code or instructions). When the code or the instructions are run on a computer, the computer is caused to perform the method in any one of the first aspect and the implementations of the first aspect, or perform the method in any one of the second aspect and the implementations of the second aspect.

According to a seventh aspect, a computer program product is provided. The computer program product includes a computer program (which may also be referred to as code or instructions). When the computer program is run, the method in any one of the first aspect and the implementations of the first aspect is performed, or the method in any one of the second aspect and the implementations of the second aspect is performed.

According to an eighth aspect, a graphics user interface on an electronic device is further provided. The electronic device includes a display screen, one or more memories, and one or more processors. The one or more processors are configured to execute one or more computer programs stored in the one or more memories. The graphics user interface may include a graphics user interface displayed when the electronic device performs any one of the first aspect and the implementations of the first aspect of this application, or may include a graphics user interface displayed when the electronic device performs any one of the second aspect and the implementations of the second aspect of this application.

It should be noted that, for beneficial effects of the electronic device provided in the second aspect to the eighth aspect of this application in each scenario, refer to the beneficial effects of any implementation of the first aspect. Details are not described herein again.

### BRIEF DESCRIPTION OF DRAWINGS

FIG. 1a-1 and FIG. 1a-2 are a diagram of a long interface;
FIG. 1b is a diagram of rendering of a method for rendering a long interface;
FIG. 2 is a diagram of a possible hardware structure of an electronic device;
FIG. 3 is a block diagram of a software system architecture of an electronic device according to an embodiment of this application;
FIG. 4 is a schematic flowchart of a method for rendering a long interface according to an embodiment of this application;
FIG. 5 is a diagram of a division result according to an embodiment of this application;
FIG. 6 is another diagram of a division result according to an embodiment of this application;
FIG. 7 is still another diagram of a division result according to an embodiment of this application;
FIG. 8 is a diagram of selecting a target display block according to an embodiment of this application;
FIG. 9 is a diagram of selecting a target display block according to an embodiment of this application;
FIG. 10 is a schematic flowchart 1 of a method for displaying an application interface according to an embodiment of this application;
FIG. 11 is a schematic flowchart 2 of a method for displaying an application interface according to an embodiment of this application; and
FIG. 12 is a schematic flowchart 3 of a method for displaying an application interface according to an embodiment of this application.

### DESCRIPTION OF EMBODIMENTS

The following describes in detail embodiments of this application with reference to the accompanying drawings.

Embodiments of this application may be applied to the field of terminal technologies, and may be specifically applicable to a scenario in which a long interface is displayed on an electronic device. The long interface may be generally constructed through a scrollable component, so that more information can be displayed.

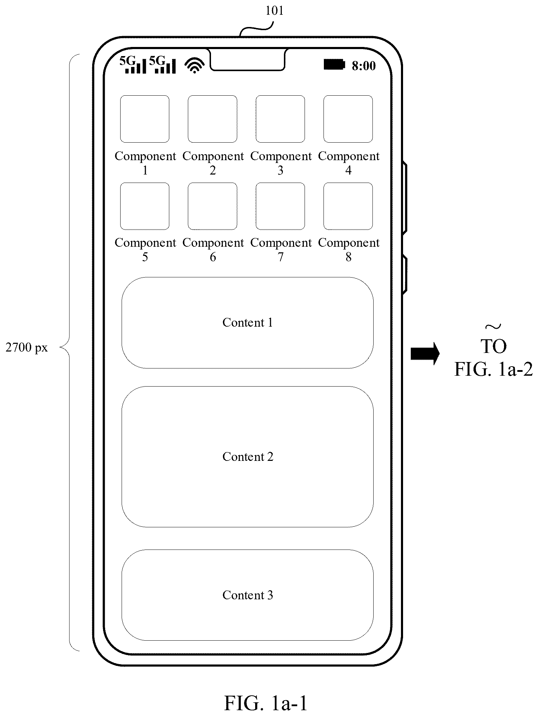

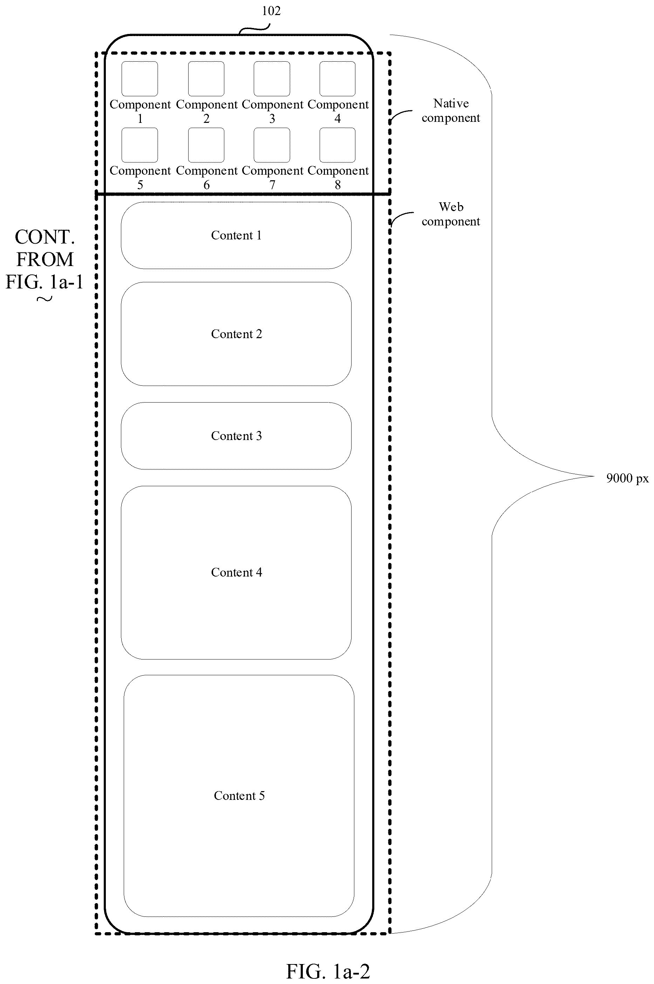

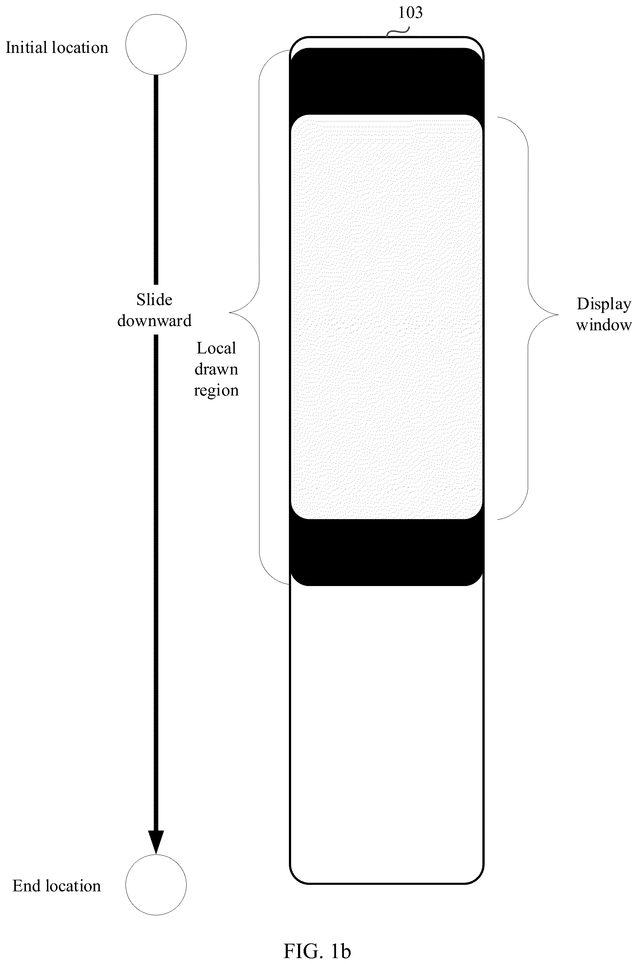

For example, FIG. 1a-1 and FIG. 1a-2 are a diagram of a long interface. As shown in an interface 101 in FIG. 1a-1, a display window of an electronic device may display a partial interface region of the long interface. A height of the display window may be determined based on a size of a screen, for example, may be 2700 pixels (px). As shown in an interface 102 in FIG. 1b, a complete long interface is displayed, and a height of the long interface is greater than the height of the display window, for example, may be 9000 px. Optionally, the long interface may be, for example, a web page (which may also be referred to as an "H5 interface") developed based on a hypertext markup language (hypertext markup language, HTML) 5 technology, and may be constructed through a native component and a web component. For example, the native component may be configured to construct a fixed display interface in the H5 interface, for example, a component 1 to a component 8 shown in the interface 101 or the interface 102. The web component may be configured to construct a web interface in the H5 interface. For example, the web interface shown in the interface 102 may include content 1 to content 5.

Based on a hardware limitation of the electronic device, the electronic device has a maximum rendering height. For example, the maximum rendering height may be 8096 px. For some scenarios in which a height of a long interface exceeds the maximum rendering height, the electronic device cannot draw the long interface through rendering once. Therefore, a local drawing manner is generally used. In an optional implementation, FIG. 1b is a diagram of rendering of a method for rendering a long interface. With reference to the interface 101 and the interface 102 shown in FIG. 1a-1 and FIG. 1a-2, it can be learned that, on the electronic device, only a partial interface region that is in the long interface and that has a same size as the display window may be displayed. Based on this, a local drawn region shown in an interface 103 shown in FIG. 1b may be a region larger than the display window, and a location of the local drawn region may be determined in response to a region that needs to be displayed on the display window. For example, the local drawn region may be locally vertically centered with the display window.

In a process of sliding the H5 interface, the electronic device synchronously updates the local drawn region based on a location of the display window in the H5 interface. Therefore, in the sliding process, the local drawn region is continuously recalculated and rendered, and then the local drawn region is cropped based on a size of the display window. As a result, a high requirement is imposed on calculation performance of the electronic device, and a large performance loss exists. Even when the sliding operation is fast, problems of a frame loss and appearance of white blocks may further occur due to untimely calculation.

In view of this, embodiments of this application provide a method for rendering a long interface, a method for displaying an application interface, and an electronic device. In the method, a long interface is pre-divided into a plurality of display blocks, and the electronic device selects a target display block in response to a sliding offset indicated by a sliding operation; and then the electronic device displays an application interface based on a rendered target display block. According to the method, a performance loss of the electronic device can be reduced, a probability of a frame loss of the electronic device can be reduced, and a possibility of displaying a white block can be reduced.

The technical solutions in embodiments of this application may be applied to an electronic device. The electronic device may be an electronic device that can display an interface, such as a mobile phone, a tablet computer, a handwriting tablet, a wearable device (for example, a watch or a band), a vehicle-mounted device, an augmented reality (augmented reality, AR)/virtual reality (virtual reality, VR) device, a notebook computer, an ultra-mobile personal computer (ultra-mobile personal computer, UMPC), a netbook, a personal digital assistant (personal digital assistant, PDA), or a smart home device (for example, a smart television or a smart speaker with a display screen). It may be understood that a specific type of the electronic device is not limited in embodiments of this application.

An example embodiment of an electronic device to which embodiments of this application may be applied may include, but is not limited to, an electronic device using HarmonyOS^{®}, IOS^{®}, Android^{®}, Microsoft^{®}, or another operating system. Alternatively, the electronic device may be another electronic device, for example, a laptop (laptop) computer having a touch-sensitive surface (for example, a touch panel).

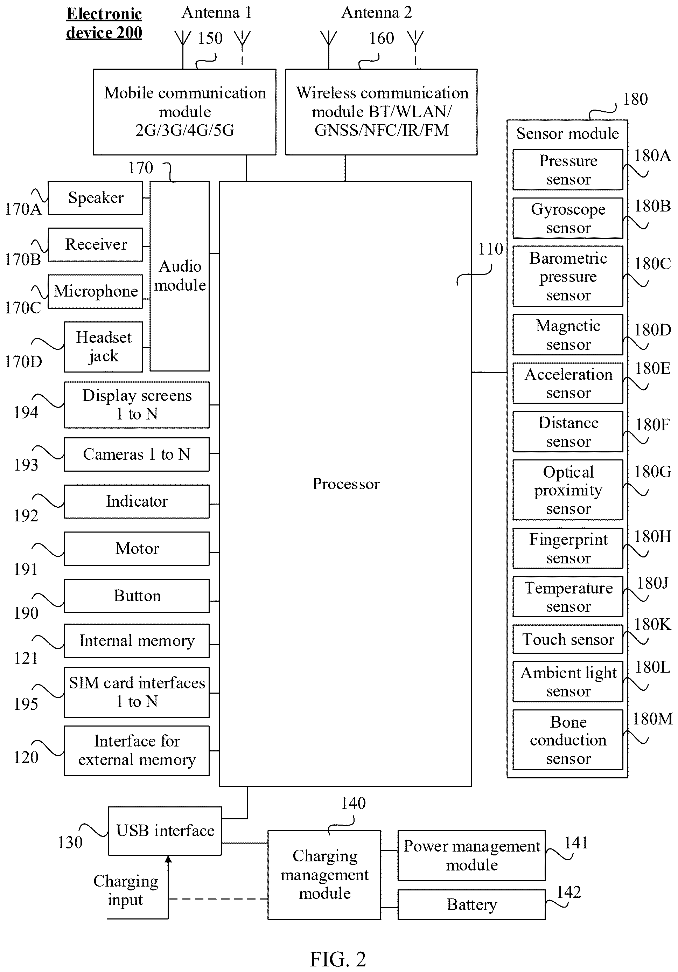

FIG. 2 is a diagram of a possible hardware structure of an electronic device. As shown in FIG. 2, the electronic device 200 may include a processor 110, an interface 120 for external memory, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display screen 194, a subscriber identity module (subscriber identity module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent components, or may be integrated into one or more processors. The controller may be a nerve center and a command center of the electronic device 200. The controller may generate an operation control signal based on an instruction operation code and a time sequence signal, to complete control of instruction reading and instruction execution. A memory may be further disposed in the processor 110, and is configured to store instructions and data. In some embodiments, the memory in the processor 110 is a cache memory. The memory may store instructions or data just used or cyclically used by the processor 110. When the processor 110 needs to use the instructions or the data again, the processor 110 may directly invoke the instructions or the data from the memory. This avoids repeated access, reduces waiting time of the processor 110, and improves system efficiency. In this embodiment of this application, the processor 110 may be configured to divide a long interface into a plurality of display blocks, may be further configured to select a target display block from the plurality of display blocks in response to a sliding offset indicated by a sliding operation, and may be configured to determine display content of a display window based on the target display block, and display the display content through the display screen 194. In this embodiment of this application, the target display block may be rendered through the GPU included in the processor 110.

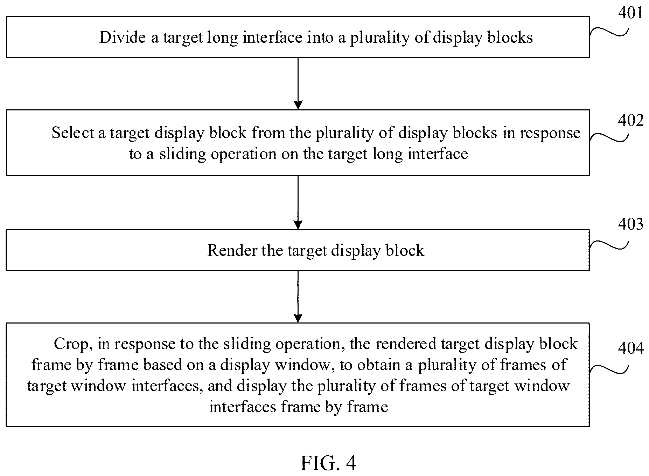

The display screen 194 is configured to display a display interface of an application, and the like. The display screen 194 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, a quantum dot light-emitting diode (quantum dot light-emitting diode, QLED), or the like. In some embodiments, the electronic device 200 may include one or N display screens 194, where N is a positive integer greater than 1. In this embodiment of this application, the display screen 194 may be configured to display an interface of a display window obtained after processing is performed by using the method provided in this embodiment of this application, for example, an interface shown in FIG. 4 to FIG. 9 in the following embodiments.

The camera 193 is configured to capture a static image or a video. The camera 193 may include a front-facing camera and a rear-facing camera.

The internal memory 121 may be configured to store computer-executable program code, and the executable program code includes instructions. The processor 110 runs the instructions stored in the internal memory 121, to perform various functional applications and data processing of the electronic device 200. The internal memory 121 may include a program storage area and a data storage area. The program storage area may store an operating system, software code of at least one application, and the like. The data storage region may store data (for example, an image or a video) and the like that are generated during use of the electronic device 200. In addition, the internal memory 121 may include a high-speed random access memory, or may include a non-volatile memory, for example, at least one magnetic disk storage device, a flash memory, or a universal flash storage (universal flash storage, UFS). In this embodiment of this application, the internal memory 121 may store, for example, program instructions used to implement the method for rendering a long interface provided in this application, a division rule for dividing a long interface into a plurality of display blocks, a correspondence between a sliding offset and a target display block, and the like. Content stored in the internal memory 121 is not limited in this application.

The touch sensor 180K and the display screen 194 form a touchscreen, which is also referred to as a "touchscreen". The touch sensor 180K is configured to detect a touch operation performed on or near the touch sensor. The touch sensor 180K may transmit the detected touch operation to the application processor to determine a touch event type. A visual output related to the touch operation may be provided through the display screen 194. In some other embodiments, the touch sensor 180K may alternatively be disposed on a surface of the electronic device 200 at a location different from that of the display screen 194. In this embodiment of this application, the touch sensor 180K may collect, based on an interface corresponding to an application window displayed by the electronic device through the display screen 194, a user operation of a user on the interface. For example, the user operation may include, but is not limited to, an upward sliding operation and a downward sliding operation.

It may be understood that the components shown in FIG. 2 constitute no specific limitation on the mobile phone. The mobile phone may alternatively include more or fewer components than those shown in the figure, or some components may be combined, or some components may be split, or a different component arrangement may be used. In the following embodiments, the electronic device 200 shown in FIG. 2 is used as an example for description.

An operating system (operating system, OS) in embodiments of this application is the most basic system software running on the electronic device 200. A software system of the electronic device 200 may use a layered architecture, an event-driven architecture, a microkernel architecture, a micro service architecture, or a cloud architecture. In this embodiment of this application, an operating system using a layered architecture is used as an example to describe a software system architecture of the electronic device 200.

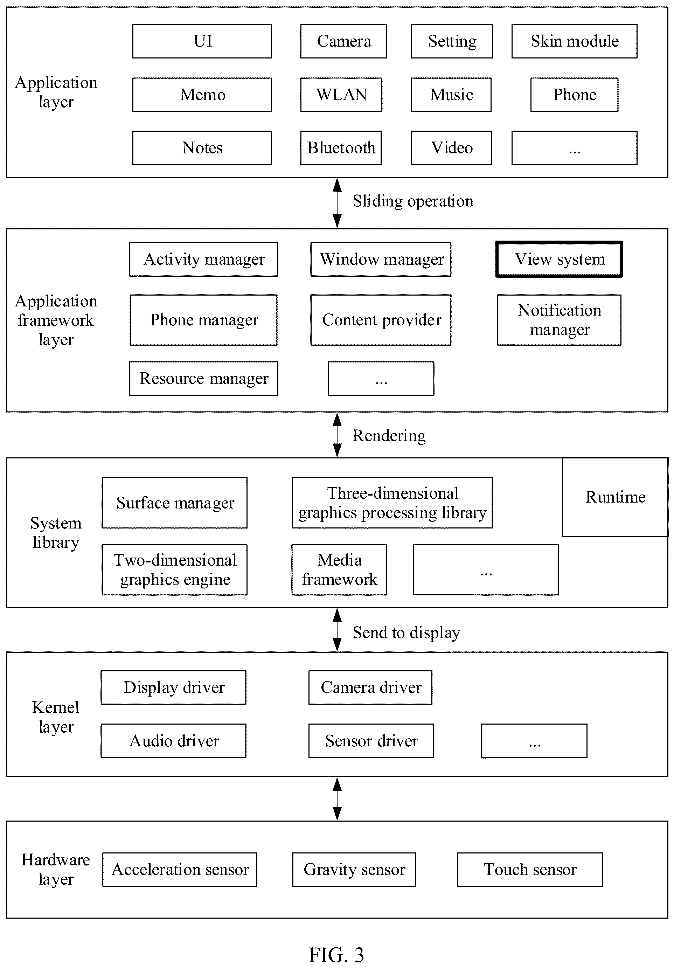

FIG. 3 is a block diagram of a software system architecture of an electronic device according to an embodiment of this application. As shown in FIG. 3, the software system architecture of the electronic device may be a layered architecture. For example, software may be divided into several layers, and each layer has a clear role and task. The layers communicate with each other through a software interface. In some embodiments, an operating system is divided into five layers: an application layer, an application framework (framework, FWK) layer, a runtime and system library, a kernel layer, and a hardware layer from top to bottom.

The application layer may include a series of application packages. As shown in FIG. 3, the application layer may include a camera, settings, a skin module, a user interface (user interface, UI), a third-party application, and the like. The third-party application may include a wireless local area network (wireless local area network, WLAN), Music, Phone, Bluetooth, Video, Memo, Notes, and the like.

In a possible implementation, an application may be developed by using a java language, and is completed by invoking an application programming interface (application programming interface, API) provided by the application framework layer. A developer may interact with a bottom layer (for example, the hardware layer and the kernel layer) of the operating system through the application framework layer, to develop an application of the developer. The application framework layer mainly includes a series of services and management systems of the operating system. In this embodiment of this application, the electronic device may detect a sliding operation of a user in an application that can display a long interface and that is included in the application layer, and invoke, in response to the sliding operation, an API provided by the application framework layer.

The application framework layer provides an application programming interface and a programming framework for an application at the application layer. The application framework layer includes some predefined functions. As shown in FIG. 3, the application framework layer may include an activity manager, a window manager, a content provider, a view system, a phone manager, a resource manager, a notification manager, and the like.

The activity manager is configured to: manage a life cycle of each application, provide a common navigation rollback function, and provide an interaction interface for windows of all programs.

The window manager is configured to manage a window program. The window manager may obtain a size of the display screen, determine whether there is a status bar, perform screen locking, take a screenshot, and the like. The content provider is configured to: store and obtain data, and enable the data to be accessed by an application. The data may include a video, an image, audio, calls that are made and received, a browsing history and bookmarks, an address book, and the like.

The view system includes a visual component such as a component for displaying a text, or a component for displaying a picture. The view system may be configured to construct an application. A display interface may include one or more views. For example, a display interface including an SMS message notification icon may include a text display view and a picture display view. In this embodiment of this application, the view system may include a native (native) component, or may include a web component. For example, the web component may be further combined with various visual components. For example, as shown in the interface 102 in FIG. 1a-2, the web component may be configured to display a web interface, and the web interface may include a plurality of pieces of display content. In addition, a web component that exceeds the display window may be nested in a scrolling component, so that a web nested scrolling scenario can be implemented, that is, a long interface can be displayed through a sliding operation. Optionally, a height of the web component may be set to be consistent with that of the web interface, so that a scroll bar can be hidden. In another optional manner, the height of the web component is less than that of the web interface, and the scroll bar may indicate a current display location of the web interface. Alternatively, when a long interface includes another interface such as a fixed display interface of the native component in addition to the web interface, the scroll bar may also indicate a current display location of the long interface.

In this embodiment of this application, in response to a sliding operation, the view system included in the application framework layer may be invoked, to calculate a to-be-drawn target display block. It should be understood that, in response to the sliding operation, a function, for example, a resource manager, included in the application framework layer may be further invoked, to obtain display data corresponding to the target display block.

After the to-be-drawn target display block is obtained through calculation, the to-be-drawn target display block may be sent to the system library, to obtain a to-be-displayed interface through rendering.

The phone manager is configured to provide a communication function of the electronic device, for example, management of a call status (including answering, declining, or the like).

The resource manager provides various resources such as a localized character string, an icon, an image, a layout file, and a video file for an application.

The notification manager enables an application to display notification information in a status bar, and may be configured to convey a notification message. The notification manager may automatically disappear after a short pause without requiring a user interaction. For example, the notification manager is configured to notify download completion, give a message notification, and the like. The notification manager may alternatively be a notification that appears in a top status bar of the system in a form of a graph or a scroll bar text, for example, a notification of an application that is run on a background, or may be a notification that appears on the screen in a form of a dialog window. For example, text information is notified in the status bar, an announcement is given, the electronic device vibrates, or an indicator light blinks.

The runtime includes a core library and a virtual machine. The runtime schedules and manages an operating system.

The core library includes two parts: a function that needs to be invoked, and a core library of the operating system. The application layer and the application framework layer run on the virtual machine. The virtual machine is configured to implement functions such as object lifecycle management, stack management, thread management, security and exception management, and garbage collection.

The system library may include a plurality of functional modules, for example, a surface manager, a media framework, a three-dimensional graphics processing library (for example, OpenGL ES), and a two-dimensional graphics engine (for example, SGL).

The surface manager is configured to manage a display subsystem and provide fusion of two-dimensional and three-dimensional layers for a plurality of applications.

The media framework supports playback and recording of audios and videos in a plurality of commonly used formats, static image files, and the like. The media framework may support a plurality of audio and video coding formats such as MPEG4, H.264, MP3, AAC, AMR, JPG, and PNG.

The three-dimensional graphics processing library is configured to implement three-dimensional graphics drawing, image rendering, composition, layer processing, and the like.

The two-dimensional graphics engine is a drawing engine for two-dimensional drawing. For example, when the target display block is two-dimensional drawing, processing such as rendering may be performed through the two-dimensional graphics engine.

In some embodiments, the three-dimensional graphics processing library may be configured to draw a three-dimensional motion trajectory image, and the two-dimensional graphics engine may be configured to draw a two-dimensional motion trajectory image.

The kernel layer is a layer between hardware and software. The kernel layer includes at least a display driver, a camera driver, an audio driver, and a sensor driver. In this embodiment of this application, the kernel layer may receive a to-be-displayed interface obtained through rendering, and implement sending to display by invoking the display driver, that is, implement display through the display screen 194. It should be understood that the to-be-displayed interface is obtained by performing cropping based on the target block obtained through rendering and the display window of the electronic device.

The hardware layer may include various sensors such as an acceleration sensor, a gravity sensor, and a touch sensor.

Generally, the electronic device 200 may run a plurality of applications at the same time. In a simple case, one application may correspond to one process, and in a complex case, one application may correspond to a plurality of processes. Each process has a process number (process ID).

It should be understood that "at least one of the following items (pieces)" or a similar expression thereof in embodiments of this application indicates any combination of these items, and includes a singular item (piece) or any combination of plural items (pieces). For example, at least one of a, b, or c may represent: a, b, c, a and b, a and c, b and c, or a, b and c, where a, b, and c may be a singular or plural number. "A plurality of" refers to two or more than two. The term "and/or" describes an association relationship between associated objects, and indicates that three relationships may exist. For example, A and/or B may indicate the following cases: Only A exists, both A and B exist, and only B exists, where A and B may be singular or plural. The character "/" generally indicates an "or" relationship between the associated objects.

In addition, it should be understood that in descriptions of this application, terms such as "first" and "second" are merely used for distinguishing and description, but should not be understood as indicating or implying relative importance, or should not be understood as indicating or implying a sequence.

It should be understood that the hardware structure of the electronic device may be shown in FIG. 2, and the software system architecture of the electronic device may be shown in FIG. 3. A software program and/or a module corresponding to the software system architecture of the electronic device may be stored in the internal memory 121. The processor 110 may run the software program and the application stored in the internal memory 121, to perform a procedure of the method for rendering a long interface provided in embodiments of this application.

To facilitate understanding of the method for rendering a long interface provided in this application, the following describes an implementation process of the method provided in this application with reference to content shown in FIG. 4 to FIG. 9.

Embodiments of this application are applicable to a scenario in which a long interface is displayed on an electronic device. For example, when the electronic device is a mobile phone, the long interface may be, for example, a home page browsing interface of some applications, or a web interface that may be provided inside some applications. When the electronic device is a computer, the long interface may be, for example, a web interface of a browser. A specific scenario of the long interface is not limited in embodiments of this application, and may be used in all scenarios in which the long interface is displayed on the electronic device.

FIG. 4 is a schematic flowchart of a method for rendering a long interface according to an embodiment of this application. The procedure may include the following steps.

**Step 401: Divide a target long interface into a plurality of display blocks.** Heights of the display blocks are greater than a height of a display window of an electronic device.

**In** a possible scenario, when detecting a view operation on the target long interface for the first time, or detecting that no division result of display blocks exists in a storage, the electronic device may obtain a plurality of display blocks by performing step 401, and may store a division result of the plurality of display blocks. In this scenario, when detecting a view operation on the target long interface again, the electronic device may invoke the stored division result, without a need to perform division processing again. For example, after an application is installed on a mobile phone, when detecting, for the first time, an operation of starting the application, the mobile phone divides a homepage interface of the application, to obtain a plurality of display blocks, and stores a division result. When detecting an operation of starting the application again, the mobile phone may directly invoke the stored division result, without a need to divide the homepage interface of the application again.

Optionally, a division result may be associated based on information about an application. The information about the application may be, for example, a name, code, or an identifier of the application. In another optional manner, when the long interface is a web interface, a division result may be associated based on a web identifier, and the web identifier may be, for example, a web website address.

It should be understood that, when detecting an execution condition that a height of the target long interface changes, the height of the display window changes, or the like, the electronic device may perform step 401 again to obtain a recalculated division result. For example, in a scenario in which a user uses split screens on the electronic device, step 401 may be performed again. Alternatively, when performing an operation of returning from a secondary interface to a main interface, the electronic device may perform step 401 again. The secondary interface may be a new interface to which the main interface jumps.

In addition, it should be further understood that, in this scenario, step 401 included in the procedure shown in FIG. 4 does not need to be performed each time, but may be performed when the execution condition is met. The execution condition may include, for example, but is not limited to: a first-time view operation, lack of a division result in the storage, a change in the height of the target long interface, or a change in the height of the display window.

In another possible scenario, the electronic device may alternatively perform step 401 each time in response to an operation used to display the target long interface. In this scenario, there is no need to occupy storage space. In addition, each time a currently opened long interface is divided into display blocks, accuracy of a division result can be ensured, and accuracy of a display interface can be improved.

In this embodiment of this application, a plurality of possible division manners are provided, for example, including but not limited to the following manners:
Manner A: All display blocks except a tail display block have a same height, and spacings between display blocks are the same.

A height of a display block meets a preset height condition. The preset height condition is that the height of the display block is greater than the height of the display window of the electronic device and is less than the height of the long interface. For example, the height of the display block may be within a range of a preset multiple of the height of the display window, for example, 1.5 times to 2.5 times. For another example, the height of the display block may alternatively be within a preset pixel value range of the height of the display window, for example, 4000 px to 800 px. For still another example, the height of the display block may alternatively be any value that meets the preset height condition. For example, an example in which the display window is 2700 px is used. The height of the display block may be, for example, 5000 px, 5400 px, 6000 px, 7000 px, or 8000 px. A specific value of the height of the display block is not limited in this application.

A spacing between display blocks meets a preset spacing condition. The preset spacing condition is that the spacing is less than the height of the display window. For example, the spacing between the display blocks may be any value less than 2700 px. 1000 px is used as an example in the following embodiments. It should be understood that a smaller spacing indicates that a larger quantity of display blocks may be obtained through division, and a larger spacing indicates that a smaller quantity of display blocks may be obtained through division.

Optionally, the height of the display window may be a height of a screen of the electronic device.

In another optional manner, the height of the display window may be a height of a display window corresponding to an application, for example, the height of the display window is less than the height of the screen.

In still another optional manner, the height of the display window may alternatively be a height of a display window corresponding to a non-full-screen scenario such as screen splitting or a pop-up window.

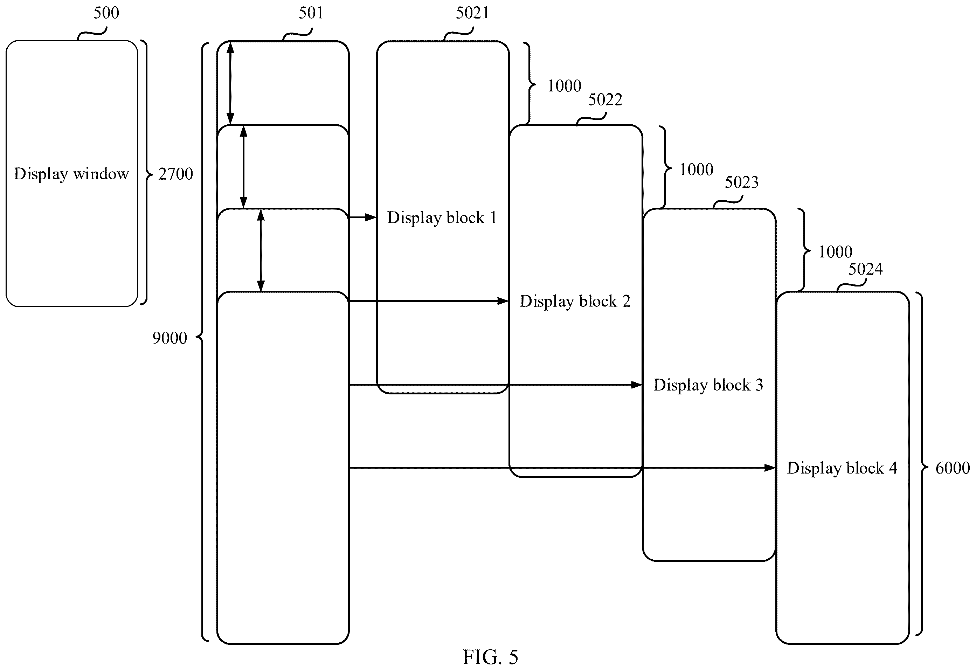

For example, FIG. 5 is a diagram of a division result according to an embodiment of this application. 500 in FIG. 5 is a diagram of a display window, and an example in which a height of the display window is 2700 px is used. As shown in 501 in FIG. 5, for example, a height of a long interface is 9000 px. The long interface may be sequentially divided into four display blocks, for example, a display block 1 shown in 5021, a display block 2 shown in 5022, a display block 3 shown in 5023, and a display block 4 shown in 5024 in FIG. 5. As shown in 5021 to 5024 in FIG. 5, heights of all the display blocks are the same, and each are 6000 px; and spacings between the display blocks are the same, and each are 1000 px.

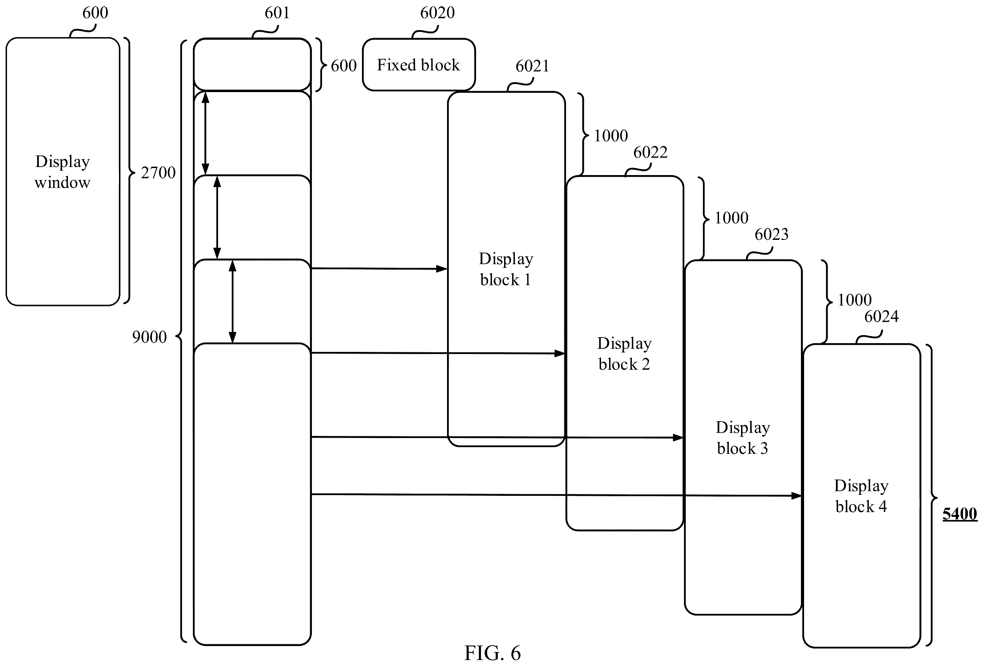

For example, FIG. 6 is another diagram of a division result according to an embodiment of this application. 600 in FIG. 6 is a diagram of a display window, and an example in which a height of the display window is 2700 px is still used. As shown in 601 in FIG. 6, an example in which a height of a long interface is 9000 px is still used. With reference to FIG. 1a-1 and FIG. 1a-2, the long interface includes a fixed display interface constructed by a native component and a web interface constructed by a web component. The fixed display interface generally remains unchanged, and the web interface may change. Therefore, the long interface may be sequentially divided into a fixed block and four display blocks, for example, a fixed block shown in 6020, a display block 1 shown in 6021, a display block 2 shown in 6022, a display block 3 shown in 6023, and a display block 4 shown in 6024 in FIG. 6. As shown in 6020 in FIG. 6, a height of the fixed block is 600 px. As shown in 6021 to 6024 in FIG. 6, heights of the display block 1 to the display block 3 are the same, and each are 6000 px, while the display block 4 is used as a tail display block of the long interface, and a height of the display block 4 is 5400 px. Spacings between the display blocks are the same, and each are 1000 px. It should be understood that, in a process of dividing the long interface, the tail display block may be obtained based on the height of the long interface, a quantity of display blocks, and a spacing between display blocks.

For example, a height of a display block is 8000 px, a spacing between display blocks is 1000 px, a height of a long interface 1 is 9000 px, a height of a long interface 2 is 9010 px, and a height of a long interface 3 is 10010 px. A division result may be shown in the following Table 1:

**Table 1**

| | Display block 1 | Display block 2 | Display block 3 | Display block 4 |
|---|---|---|---|---|
| Long interface 1 (9000 px) | {0, 8000} | {1000, 9000} | × | × |
| Long interface 2 (9010 px) | {0, 8000} | {1000, 9000} | {2000, 9010} | × |
| Long interface 3 (10990 px) | {0, 8000} | {1000, 9000} | {2000, 10000} | {3000, 10990} |

It can be learned from Table 1 that, as the long interface increases, the long interface may be divided into more display blocks. For example, the long interface 1 may be divided into two display blocks, the long interface 2 may be divided into three display blocks, and the long interface 4 may be divided into four display blocks. In addition, a height of the tail display block may be determined based on the spacing between the display blocks and a height of a remaining region after the display blocks are obtained through division. For example, after the display block 1 is obtained through division of the long interface 1, at a location that is spaced by 1000 px from the display block 1, a remaining region with a height may be exactly divided into the display block 2 whose height is 8000 px. After the display block 1 and the display block 2 are obtained through division of the long interface 2, at a location that is spaced by 1000 px from the display block 2, a remaining region with a height may be divided into the display block 3 whose height is 7010 px. After the display block 1 to the display block 3 are obtained through division of the long interface 3, at a location that is spaced by 1000 px from the display block 3, a remaining region with a height may be divided into the display block 2 whose height is 7990 px.

Manner B: Heights of all display blocks except a tail display block are not completely the same, and spacings between display blocks are the same.

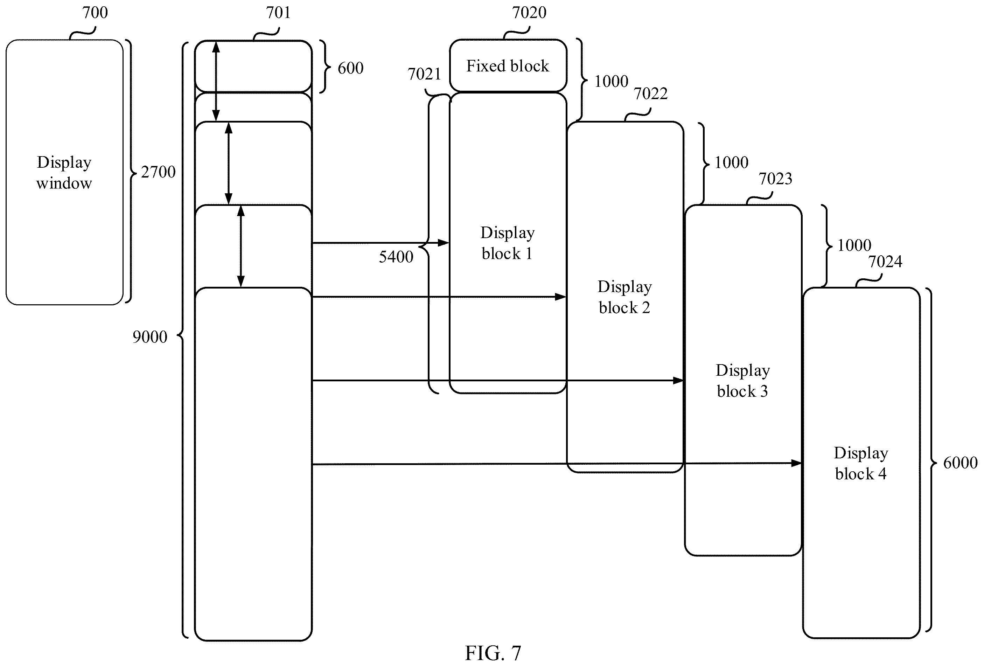

For example, FIG. 7 is still another diagram of a division result according to an embodiment of this application. 700 in FIG. 7 is a diagram of a display window, and an example in which a height of the display window is 2700 px is still used. As shown in 701 in FIG. 7, an example in which a height of a long interface is 9000 px is still used. With reference to FIG. 1a-1 and FIG. 1a-2, the long interface includes a fixed display interface constructed by a native component and a web interface constructed by a web component. The fixed display interface generally remains unchanged, and the web interface may change. Therefore, the long interface may be divided into a fixed block and four display blocks, for example, a fixed block shown in 7020, a display block 1 shown in 7021, a display block 2 shown in 7022, a display block 3 shown in 7023, and a display block 4 shown in 7024 in FIG. 7. As shown in 7020 to 7024 in FIG. 7, a sum of a height of the display block 1 and a height of the fixed block may be 6000 px, or may be understood as that the height of the fixed block is 600 px and the height of the display block 1 is 5400 px, and heights of the display block 2 to the display block 4 are the same, and each are 6000 px; and spacings between the display blocks are the same, and each are 1000 px, where a start location of the display block 2 is calculated from a start location of the fixed block. The fixed block and the display block 1 may be rendered together. In this example, in application scenarios of some applications, frequency of viewing content below the long interface is low, but frequency of viewing and using fixed information is high. Therefore, the height of the display block 1 adjacent to the fixed block may be set to be less than a size of another display block, so that a performance loss and a frame loss problem can be balanced, and power consumption can be reduced.

In another example, in a scenario in which a fixed component and a web component are not distinguished, or in a scenario in which the fixed component is not included, the electronic device may alternatively, in a division process, divide the long interface to obtain a 1^{st} display block whose height is less than a height of another display block. For example, the height of the 1^{st} display block may be greater than the height of the display window of the electronic device, and less than the height of the another display block, for example, the height of the 1^{st} display block is 1.2 times to 1.5 times the height of the display window, or is 3000 px to 4000 px. For another example, a sum of the height of the 1^{st} display block and a height of a fixed block may be greater than the height of the display window of the electronic device and less than the height of the another display block. In this way, the height of the 1^{st} display block is set to be different from the height of the another display block, so that a performance loss and a frame loss problem can be balanced.

In another possible division manner, spacings between display blocks may alternatively be different. Alternatively, the display blocks may be divided based on the height of the long interface and in a scenario in which a height of a display block meets a preset height condition and a spacing between display blocks meets a preset spacing condition. In this scenario, different processing may not be performed on the tail display block.

**Step 402: Select a target display block from the plurality of display blocks in response to a sliding operation on the target long interface.**

**In** this embodiment of this application, a sliding offset value is determined in response to the sliding operation on the target long interface, and then the target display block is selected from the plurality of display blocks based on the sliding offset value. Optionally, the sliding offset value may be determined based on a sliding offset and a location of a display interface before the sliding operation.

In an optional embodiment, in a sliding direction, when the sliding offset value does not exceed a preset pixel value of a currently selected display block, the current display block may be selected. When the sliding offset value exceeds a preset pixel value of a currently selected display block, a next adjacent display block may be selected. It should be understood that the currently selected display block may also be referred to as an original display block, and may be understood as a historically selected target display block. For example, before the electronic device detects a sliding operation, the currently selected display block may be a 1^{st} display block included in the long interface, or may be, for example, a target display block determined by the electronic device in response to a previous sliding operation. For example, the preset pixel value may be, for example, a pixel value at a middle location of a display block, or may be a pixel value at any location near the middle location. This is not limited in this application.

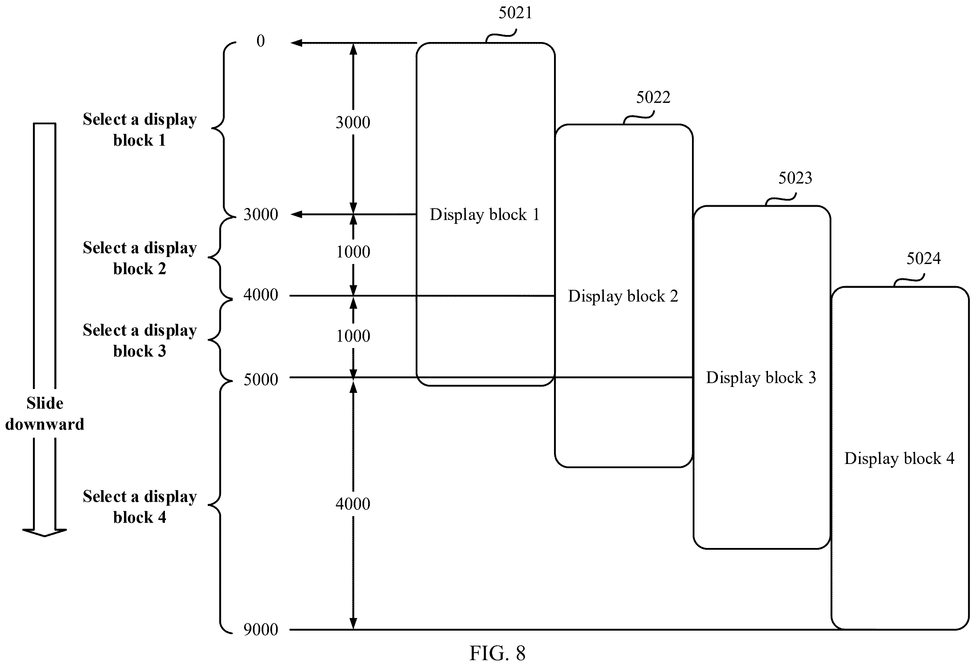

For example, FIG. 8 is a diagram of selecting a target display block according to an embodiment of this application. An example of the division result of the display blocks described in FIG. 5 and in which the preset pixel value is the pixel value at the middle location of the display block is used. In a scenario in which a sliding operation is sliding downward, when the sliding offset value is {0, 3000}, the selected target display block is a display block 1; when the sliding offset value is {3000, 4000}, the selected target display block is a display block 2; when the sliding offset value is {4000, 5000}, the selected target display block is a display block 3; and when the sliding offset value is {5000, 9000}, the selected target display block is a display block 4.

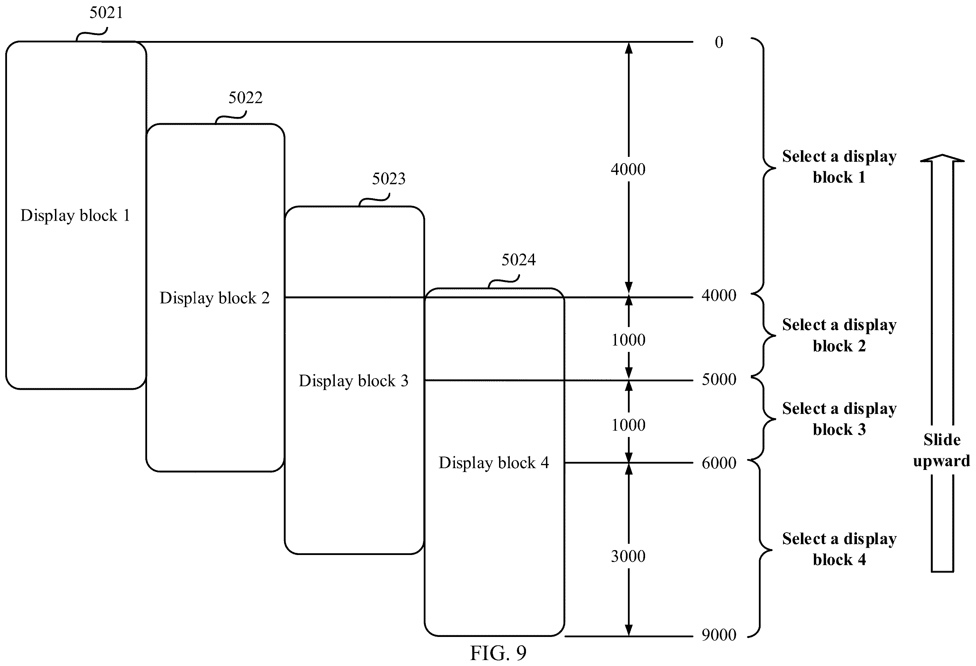

For another example, FIG. 9 is a diagram of selecting a target display block according to an embodiment of this application. An example of the division result of the display blocks described in FIG. 5 and in which the preset pixel value is the pixel value at the middle location of the display block is still used. In a scenario in which a sliding operation is sliding upward, when the sliding offset value is {9000, 6000}, the selected target display block is a display block 4; when the sliding offset value is {6000, 5000}, the selected target display block is a display block 3; when the sliding offset value is {5000, 4000}, the selected target display block is a display block 2; and when the sliding offset value is {4000, 0}, the selected target display block is a display block 1.

**Step 403: Render the target display block.**

For example, rendering may be implemented through a CPU and/or a GPU. A specific rendering manner is not described in detail in this application.

**Step 404: Crop, in response to the sliding operation, the rendered target display block frame by frame based on the display window, to obtain a plurality of frames of target window interfaces, and display the plurality of frames of target window interfaces frame by frame.**

After a rendered target display block is obtained based on a case in which the height of the display block is greater than the height of the display window, the target display block may be cropped, to obtain target window interfaces.

It should be understood that the display interface of the electronic device is generally displayed by using an image frame. In a sliding process, different content may be displayed by using a plurality of different image frames. The plurality of frames of window interfaces are obtained by cropping the target display block. Therefore, according to the method provided in this embodiment of this application, in a specific buffer region, sending to display is performed based on a same rendered target block, so that a performance loss can be reduced. As shown in FIG. 8, a buffer region corresponding to the display block 1 is {0, 3000}, and a buffer region corresponding to the display block 2 is {3000, 4000}. As shown in FIG. 9, a buffer region corresponding to the display block 1 is {4000, 0}, and a buffer region corresponding to the display block 2 is {5000, 4000}. It may also be understood that, based on a correspondence between a sliding offset value range and a selected display block shown in FIG. 8 and FIG. 9, the sliding offset value range may be used as a buffer region corresponding to a display block.

The following more accurately describes, with reference to a test result, improvement of system performance by using the method for rendering a long interface provided in this application. Descriptions are provided below with reference to Table 2.

**Table 2**

| Device | Method in FIG. 1b | Method of this application | Comparison result |
|---|---|---|---|
| CPU_B | 94.8153 | 30.8539 | -67.46% |
| CPU_M | 61.4828 | 45.8235 | -9.20% |
| CPU_L | 43.2466 | 42.3914 | -1.98% |
| GPU | 66.5149 | 39.6896 | -41% |

It can be learned from Table 2 that, in comparison with the method for rendering a long interface provided in FIG. 1b, performance losses of the CPU and the GPU can be reduced by using the method provided in this embodiment of this application.

According to the method provided in this embodiment of this application, in a manner of pre-dividing the target long interface into blocks, a target display block may be determined with reference to a correspondence between a sliding offset of a sliding operation and a block. In this way, the electronic device may render the target display block, and a specific spacing and an overlapping region exist between adjacent display blocks, so that the electronic device may crop a same display block in a specific buffer region, to obtain a plurality of frames of interfaces corresponding to a target display window. In this case, a to-be-rendered region does not need to be recalculated and re-rendered frame by frame. Therefore, according to the method, performance of the electronic device can be improved, a probability of a frame loss of the electronic device can be reduced, and a possibility of displaying a white block can be reduced.

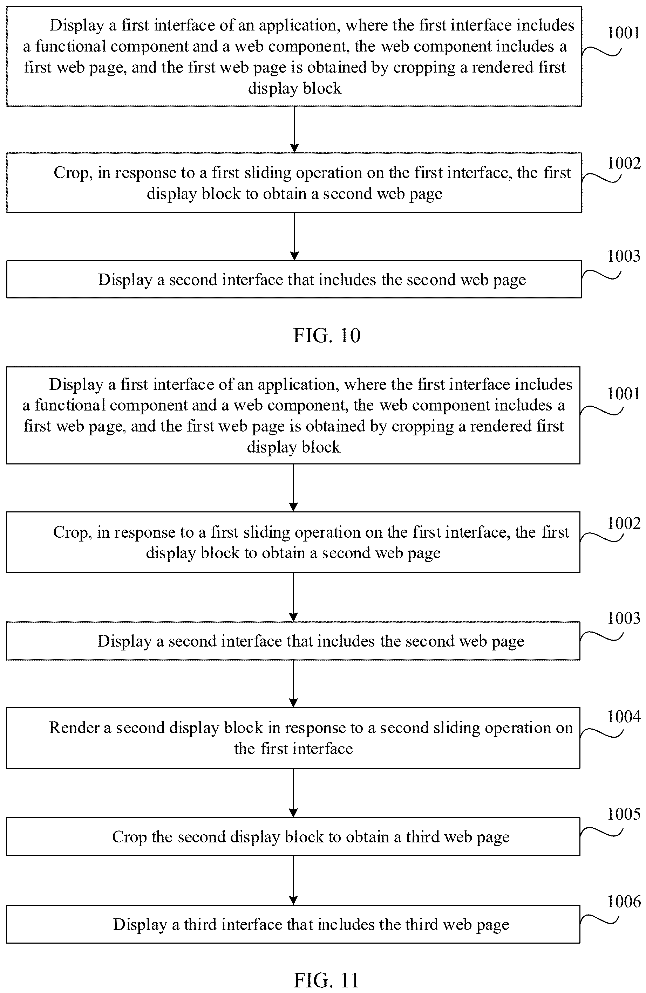

FIG. 10 is a schematic flowchart of a method for displaying an application interface according to an embodiment of this application. The method may be applied to an electronic device, and the procedure may include the following steps.

Step 1001: Display a first interface of an application, where the first interface includes a functional component and a web component, the web component includes a first web page, and the first web page is obtained by cropping a rendered first display block. The functional component may be configured to display some function information included in the application interface, and may display information included in a fixed block, for example, display information included in the fixed block shown in 6020 in FIG. 6, or display information included in the fixed block shown in 7020 in FIG. 7. For example, the functional component may be the native component described in the foregoing embodiments, and may be configured to display some fixed information, for example, the control 1 to the control 8 shown in FIG. 1a-2.

In some implementations, a display region displayed by the functional component may alternatively be obtained by cropping the rendered first display block. As shown in FIG. 7, the first display block may include the fixed block shown in 7020 and the display block 1 shown in 7021.

Step 1002: Crop, in response to a first sliding operation on the first interface, the first display block to obtain a second web page.

Step 1003: Display a second interface that includes the second web page.

It can be learned from step 1001 to step 1003 that, based on the method provided in this embodiment of this application, the first interface and the second interface that are of the application and that are displayed by the electronic device may be obtained by cropping a same display block.

FIG. 11 is another schematic flowchart of a method for displaying an application interface according to an embodiment of this application. The method may be applied to an electronic device. In addition to the steps shown in FIG. 10, the procedure may include the following steps.

Step 1004: Render a second display block in response to a second sliding operation on the first interface.

Step 1005: Crop the second display block to obtain a third web page.

Step 1006: Display a third interface that includes the third web page.

It can be learned from step 1001 to step 1006 that, based on the method provided in this embodiment of this application, when detecting, based on a sliding operation, that a target display block (namely, the second display block) needs to be changed, the electronic device may render the second display block, and obtain the third interface through cropping.

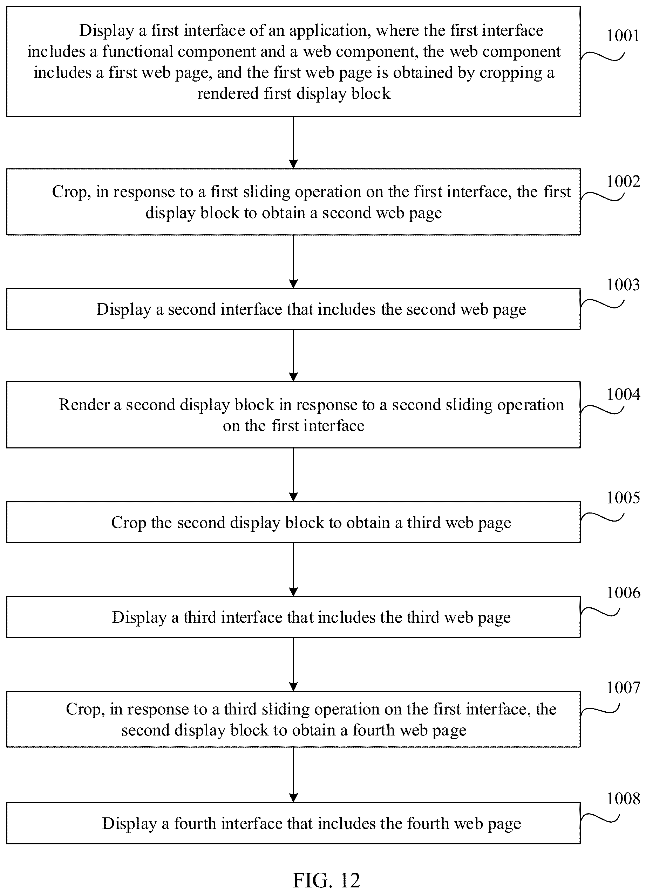

FIG. 12 is another schematic flowchart of a method for displaying an application interface according to an embodiment of this application. The method may be applied to an electronic device. In addition to the steps shown in FIG. 11, the procedure may include the following steps.

Step 1007: Crop, in response to a third sliding operation on the first interface, the second display block to obtain a fourth web page.

Step 1008: Display a fourth interface that includes the fourth web page.

It can be learned from step 1001 to step 1008 that, based on the method provided in this embodiment of this application, the first interface and the second interface that are of the application and that are displayed by the electronic device may be obtained by cropping a same display block, and the third interface and the fourth interface that are of the application and that are displayed by the electronic device may be obtained by cropping another same display block.

In this embodiment of this application, the first display block and the second display block overlap, and an overlapping height is greater than a height of the first interface.

For specific implementations of step 1001 to step 1008, refer to the descriptions in the foregoing embodiments. Details are not described herein again.

Based on the foregoing embodiments, this application further provides an electronic device. The electronic device includes a plurality of functional modules. The plurality of functional modules interact with each other to implement functions performed by the electronic device in the methods described in embodiments of this application. The plurality of functional modules may be implemented based on software, hardware, or a combination of the software and the hardware, and the plurality of functional modules may be randomly combined or divided based on a specific implementation. For example, step 401 to step 404 performed by the electronic device in the embodiment shown in FIG. 4 are performed. For another example, step 1001 to step 1003 performed by the electronic device in the embodiment shown in FIG. 10 are performed, step 1001 to step 1006 performed by the electronic device in the embodiment shown in FIG. 11 are performed, or step 1001 to step 1008 performed by the electronic device in the embodiment shown in FIG. 12 are performed.

Based on the foregoing embodiments, this application further provides an electronic device. The electronic device includes at least one processor and at least one memory. The at least one memory stores computer program instructions. When the electronic device runs, the at least one processor performs functions performed by the electronic device in the methods described in embodiments of this application, for example, step 401 to step 404 performed by the electronic device in the embodiment shown in FIG. 4 are performed. For another example, step 1001 to step 1003 performed by the electronic device in the embodiment shown in FIG. 10 are performed, step 1001 to step 1006 performed by the electronic device in the embodiment shown in FIG. 11 are performed, or step 1001 to step 1008 performed by the electronic device in the embodiment shown in FIG. 12 are performed.

Based on the foregoing embodiments, this application further provides a computer program product. The computer program product includes a computer program (which may also be referred to as code or instructions). When the computer program is run, the methods described in embodiments of this application are performed.

Based on the foregoing embodiments, this application further provides a computer-readable storage medium. The computer-readable storage medium stores a computer program (which may also be referred to as code or instructions). When the code or the instructions are executed by a computer, the computer is enabled to perform the methods described in embodiments of this application.

Based on the foregoing embodiments, this application further provides a chip. The chip is configured to read a computer program stored in a memory, to implement the methods described in embodiments of this application.

Based on the foregoing embodiments, this application provides a chip system. The chip system includes a processor, configured to support a computer apparatus in implementing the methods described in embodiments of this application. In a possible embodiment, the chip system further includes a memory. The memory is configured to store a program and data that are necessary for the computer apparatus. The chip system may include a chip, or may include a chip and another discrete component. A person skilled in the art should understand that embodiments of this application may be provided as a method, a system, or a computer program product. Therefore, this application may use a form of hardware only embodiments, software only embodiments, or embodiments with a combination of the software and the hardware. Moreover, this application may use a form of a computer program product that is implemented on one or more computer-usable storage media (including but not limited to a disk memory, a CD-ROM, an optical memory, and the like) that include computer usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may be stored in a computer-readable memory that can instruct the computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

The computer program instructions may alternatively be loaded onto a computer or another programmable data processing device, so that a series of operations and steps are performed on the computer or the another programmable device, so that computer-implemented processing is generated. Therefore, the instructions executed on the computer or the another programmable device provide steps for implementing a specific function in one or more procedures in the flowcharts and/or in one or more blocks in the block diagrams.

It is clear that a person skilled in the art can make various modifications and variations to this application without departing from the protection scope of this application. This application is intended to cover these modifications and variations of this application provided that they fall within the scope of protection defined by the following claims and their equivalent technologies.

## Claims

1. A method for rendering a long interface, applied to an electronic device, and comprising:
determining, in response to a sliding operation on the long interface, a target display block adjacent to an original display block, wherein the original display block is a display block selected before the sliding operation is detected, both the original display block and the target display block are obtained by dividing the long interface, a spacing between the original display block and the target display block is less than a height of a display window, and heights of the original display block and the target display block are greater than the height of the display window;
rendering the target display block; and
cropping, in response to the sliding operation, the rendered target display block frame by frame based on the display window, to obtain a plurality of frames of target window interfaces, and displaying the plurality of frames of target window interfaces frame by frame.

2. The method according to claim 1, wherein determining, in response to the sliding operation on the long interface, the target display block adjacent to the original display block comprises:
determining a sliding offset value corresponding to the sliding operation; and
in a sliding direction, when the sliding offset value does not exceed a preset pixel value of the original display block, determining that a selected target display block is the original display block; or
in a sliding direction, when the sliding offset value exceeds a preset pixel value of the original display block, determining to select, as the target display block, a next display block adjacent to the original display block in the sliding direction.

3. The method according to claim 2, wherein the preset pixel value is a pixel value at a middle location of the original display block.

4. The method according to any one of claims 1 to 3, wherein before determining the target display block adjacent to the original display block, the method further comprises:
sequentially obtaining N display blocks and a tail display block based on a height of the long interface, a first preset height of a display block, and a preset spacing between display blocks, wherein the tail display block is a last display block obtained through division, and N is a positive integer; and
heights of the N display blocks are equal to the first preset height, and a height of the tail display block is less than or equal to the first preset height.

5. The method according to any one of claims 1 to 3, wherein before determining the target display block adjacent to the original display block, the method further comprises:
sequentially obtaining a head display block, (N-1) display blocks, and a tail display block based on a height of the long interface, a second preset height of the head display block, a second preset height of a display block, and a preset spacing between display blocks, wherein the head display block is a 1^{st} display block obtained through division, the tail display block is a last display block obtained through division, and N is a positive integer; and
a height of the head display block is equal to the second preset height, the second preset height is less than the first preset height, heights of the (N-1) display blocks are equal to the first preset height, and a height of the tail display block is less than or equal to the first preset height.

6. The method according to any one of claims 1 to 5, wherein a height of the display block is a preset multiple of the height of the display window, and the preset multiple is greater than 1; or
a height of the display block is a predefined height, and the predefined height is greater than the height of the display window.

7. The method according to any one of claims 1 to 6, wherein the display window is a full-screen window, an application window, or a non-full-screen window of the electronic device.

8. A method for displaying an application interface, comprising:
displaying a first interface of an application, wherein the first interface comprises a functional component and a web component, the web component comprises a first web page, and the first web page is obtained by cropping a rendered first display block;
cropping, in response to a first sliding operation on the first interface, the first display block to obtain a second web page; and
displaying a second interface that comprises the second web page.

9. The method according to claim 8, wherein the method further comprises:
rendering a second display block in response to a second sliding operation on the first interface;
cropping the second display block to obtain a third web page; and
displaying a third interface that comprises the third web page.

10. The method according to claim 9, wherein the method further comprises:
cropping, in response to a third sliding operation on the first interface, the second display block to obtain a fourth web page; and
displaying a fourth interface that comprises the fourth web page.

11. The method according to claim 9 or 10, wherein the first display block and the second display block overlap, and an overlapping height is greater than a height of the first interface.

12. An electronic device, comprising at least one processor, wherein the at least one processor is coupled to at least one memory, and the at least one processor is configured to: read and execute a computer program stored in the at least one memory, to cause the method according to any one of claims 1 to 7 to be performed, or to cause the method according to any one of claims 8 to 11 to be performed.

13. A computer-readable storage medium, wherein the computer-readable storage medium stores instructions, and when the instructions are run on a computer, the computer is caused to perform the method according to any one of claims 1 to 7, or the computer is caused to perform the method according to any one of claims 8 to 11.

14. A computer program product comprising instructions, wherein when the computer program product runs on a computer, the computer is caused to perform the method according to any one of claims 1 to 7, or the computer is caused to perform the method according to any one of claims 8 to 11.
